(19) Europäisches Patentamt
European Patent Office
Office européen des brevets

(11) **EP 2 871 639 B1**

(12) **EUROPEAN PATENT SPECIFICATION**

(45) Date of publication and mention
of the grant of the patent:
**17.04.2019 Bulletin 2019/16**

(51) Int Cl.:
***G10K 11/175*** (2006.01)

(21) Application number: **13192053.0**

(22) Date of filing: **08.11.2013**

(54) **METHOD AND SYSTEM FOR MASKING NOISE**

VERFAHREN UND SYSTEM ZUR MASKIERUNG VON GERÄUSCHEN

PROCÉDÉ ET SYSTÈME DE MASQUAGE ACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2015 Bulletin 2015/20**

(73) Proprietor: **Volvo Car Corporation 40531 Göteborg (SE)**

(72) Inventor: **Lennström, David 41321 Göteborg (SE)**

(74) Representative: **Kransell & Wennborg KB P.O. Box 2096 403 12 Göteborg (SE)**

(56) References cited:
**US-A1- 2006 009 969     US-A1- 2012 076 314 US-A1- 2012 076 314**

- **D LENNSTRÖM, T. LINDBOM, A. NYKÄNEN: "Prominence of tones in electric vehicle interior noise", INTER NOISE, INNSBRUCK, AUSTRIA 2013, 15 September 2013 (2013-09-15), - 18 September 2013 (2013-09-18), XP002720858, Innsbruck, Austria**

**Description**

TECHNICAL FIELD

The invention relates to a method and system for masking noise originating from rotary equipment in a vehicle engine.

BACKGROUND ART

Noise is a big source of concern in today's society. Various types of machines emit sounds of various frequencies. Certain frequencies having a certain sound pressure level are considered noise and must due to for instance regulations be removed or reduced to below an allowable sound pressure level.

One example of such a machine is any type of engine, pump or similar emitting noise which cannot be dampened or absorbed with standard sound absorbing or noise reducing means, such as resonators or insulation.

A vehicle engine running at a specific engine rpm causes a rotary equipment such as a supercharger, fan, pump, generator, compressor or other similar equipment to emit a specific noise frequency proportional to the rotational frequency of the rotary equipment or rotary equipment rpm. The engine itself can also be seen as a rotary equipment, for instance in the case of electric motors. As the rotational frequency of the rotary equipment is coupled to the engine rpm a specific noise frequency having a frequency being determined by the engine rpm is emitted. The specific noise frequency is thus determined by engine input conditions such as rpm and/or other factors. Such a specific noise frequency usually has an amplitude which causes the specific noise frequency to be easily distinguishable over the ambient broadband sound originating from for instance the combustion engine, wheels and wind.

It is not always possible to absorb or reduce these specific noise frequencies by ordinary means such as resonators or insulation. If the specific noise frequency is of a low frequency, i.e. below approximately 300 Hz, active noise control can be utilized and a signal having the same frequency as the specific noise frequency can be output out of phase with the specific noise frequency, thereby cancelling the specific frequency. However, this is not possible for specific noise frequencies over certain frequencies, e.g. above approximately 300 Hz. There is thus a need for an improved method of dealing with unwanted specific noise frequencies, especially for specific noise frequencies which cannot be cancelled by active noise control or ordinary forms of damping or insulation.

US2012/0076314 describes a method of controlling sounds associated with a vehicle. The method includes: performing on a processor, monitoring engine torque; and selectively controlling the generation of one or more tones associated with the vehicle based on the engine torque. The engine torque is determined based on at least one of engine speed, air mass per cylinder, spark timing, intake cam phaser position, exhaust cam phaser position, exhaust gas recirculation dilution data, spark state, engine valve state, ethanol concentration, equivalence ratio, manifold pressure, ambient air pressure, oil temperature, coolant temperature, and electrical load information.

SUMMARY OF THE INVENTION

The object of the present invention is to provide an inventive method and system for masking noise originating from rotary equipment in a vehicle engine. This object is achieved by the features of the characterizing portion of claims 1 and 6. Additional features of the invention are set out in the dependent claims.

A specific noise frequency is a tonal sound or noise, i.e. a single frequency or a very narrowband sound source. An advantage with the method is that by outputting a masking noise comprising frequencies surrounding the specific noise frequency in a first bandwidth, the specific noise frequency is perceived to be less prominent than otherwise. This is based on psychoacoustics. The more outstanding or prominent a specific noise frequency is, i.e. the greater the difference is in sound level, from sound comprising a broadband spectrum the easier it is for the human ear to perceive. Also, a specific noise frequency is more easily perceived as annoying than background or ambient broadband sound. By outputting a masking noise wherein the first masking noise comprises a first central frequency, a first bandwidth and a first amplitude, wherein the first central frequency and the first amplitude is determined by said input conditions, the masking noise reduces the amplitude difference between the specific noise frequency and the ambient broadband sound surrounding the specific noise frequency in the first bandwidth causing the perceived prominence of the specific noise frequency to be reduced. The method is used together with present engine sound design in order to maintain an audibly appealing engine sound.

Rotary equipment in this application comprises rotary equipment connected to a vehicle engine such as for instance a supercharger, fan, pump, generator, compressor or other similar equipment. Rotary equipment can also comprise the whole engine itself or interior parts of the engine itself, for instance in the case of electric motors.

By using one or more microphones which are arranged to record a sound spectrum present inside a vehicle compartment, the method can be made more responsive to the actual sound present in the compartment. The sound spectrum recorded by the microphone contains ambient broadband sound and one or more specific noise frequencies originating from at least one rotary equipment.

BRIEF DESCRIPTION OF THE DRAWINGS

Figure 1 schematically describes a system according to the invention;
Figure 2 schematically describes a system according to the invention;
Figure 3 shows a sound spectrum measured inside a compartment of a vehicle with and without the system according to the invention active.

DETAILED DESCRIPTION

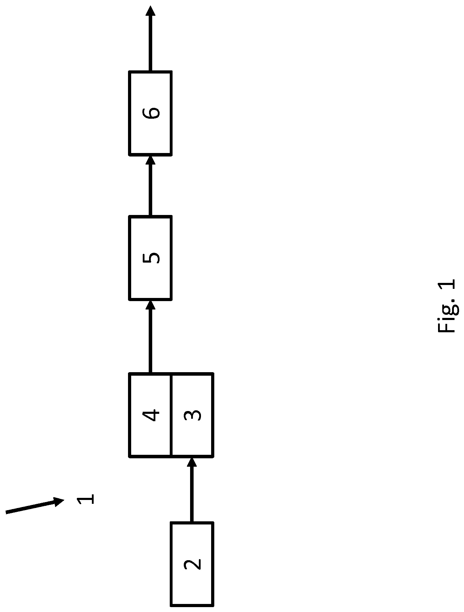

Figure 1 schematically shows a system 1 according to the invention. In connection with the system 1 one method according to the invention will be described. The system 1 comprises an electronic control unit (ECU) 2 which by means of a CAN bus is arranged to send data to other components in a vehicle, a digital signal processor (DSP) 3 comprising a noise generator 4. The noise generator 4 is connected to an amplifier 5 which in turn is connected to a speaker 6. The ECU/CAN bus in the system 1 are present in modern vehicles. The method is integrated with other engine sound designs by adding a masking noise to the sound output by the engine sound design.

One method not forming part of the invention uses information from the ECU 2 wherein engine input conditions are checked to see if they fulfil engine input condition threshold values. If one or more values are fulfilled the speaker 6 outputs a masking noise. The masking noise comprises a first central frequency, a first predetermined bandwidth and a first amplitude, wherein the first central frequency and the first amplitude is determined by said input conditions. Engine input conditions are for instance engine rpm, engine torque, rotary equipment rpm, selected gear, vehicle speed and/or throttle position.

As a non-limiting example, an engine running at 3000 rpm (= 50 Hz) may be coupled to a super charger with a ratio of 6.5, meaning that for each revolution the engine makes, the super charger rotates 6.5 revolutions. A super charger having an order of 4 emits a tone having a frequency

$$f = \frac{engine\ rpm}{60} \cdot 6.5 \cdot order\ \# = \frac{3000}{60} \cdot 6.5 \cdot 4 = 1300\ Hz.$$ The emitted tone usually has accompanying overtones having frequencies which are multiples of the high frequency tone. The multiples are determined by the order or multiple of speeds for the rotary equipment. As a non-limiting example, for a supercharger orders 4, 8, 12 and 16 give rise to unwanted tones.

By receiving engine input conditions from the ECU 2 the DSP 3 can for each engine input condition or combinations of engine input conditions calculate or extract from a look-up table which frequency or frequencies are emitted. The DSP 3 comprises a number of band pass filters which characteristics are dependent on the engine rpm. The DSP 3 further comprises one or more noise generators which are arranged to produce one or more band pass filtered noise signals. The noise generators can be arranged to produce white noise, pink noise, Brown noise, blue noise, violet noise or any other kinds of noise. Noise sources may also be combined in order to further tailor the output noise.

In the case of one tone being emitted, a first band pass filtered noise signal is generated. The first band pass filtered noise signal comprises a first central frequency being the same as the frequency of the emitted tone as calculated or extracted by the DSP and has a first bandwidth which corresponds to between 3% and 30% of the first central frequency, and thereby also to between 3% and 30% of the tone frequency. The first amplitude of the first band pass filtered noise signal is determined by the engine input conditions in a similar way as for the first frequency. The first band pass filtered noise signal is provided from the DSP 3 to the noise generator 4 as a first masking noise signal. The noise generator 4 via the amplifier 5 outputs the first masking noise by means of the speaker 6. The first masking noise thereby has a frequency spectrum matching the first band pass filtered noise signal.

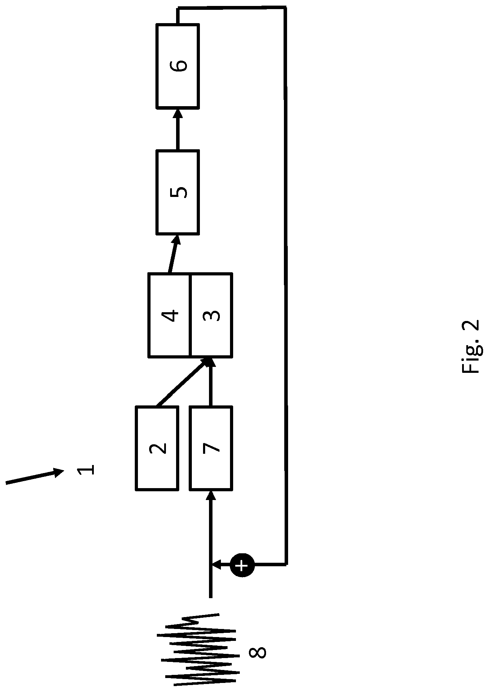

Figure 2 schematically shows a system 1 according to the invention. The system 1 is similar to the system in figure 1 with the addition of a microphone 7. The microphone 7 is for instance located in the vehicle's interior compartment and can be a microphone used for telephone calls. The system in figure 2 is arranged to use the same method as described in conjunction to figure 1 with the addition that a first tone/noise amplitude ratio is measured by the microphone 7 and a first tone/noise amplitude ratio threshold condition needs to be fulfilled in addition to engine input conditions for a first masking noise to be outputted by the speaker 6. A first masking noise is thus outputted only if both the tone/noise amplitude ratio and the engine input conditions fulfil their respective threshold values.

A first tone/noise amplitude ratio between the amplitude of a first specific noise frequency determined by said input conditions and the amplitude of ambient sound is calculated in the DSP from a sound spectrum 8 measured by the microphone 7. The first masking noise is provided in the same way as described in figure 1. The addition of the microphone 7 allows the amplitude of the first masking noise to be determined by the tone/noise amplitude ratio instead of by engine input conditions. The method described in figure 2 is recursive in order to continually measure the sound spectrum 8 and adapt the characteristics of the first masking noise depending on engine input conditions and tone/noise amplitude ratio.

As a non-limiting example engine input condition threshold values for a combustion engine can be:

- engine rpm threshold value: between 800 rpm and 6500 rpm,
- engine torque threshold value: equal to or above 70 Nm ,
- rotary equipment rpm threshold value: between 800 and 80000 rpm,
- selected gear threshold value: above second gear,
- vehicle speed threshold value: above 5 kph.

As a non-limiting example engine input condition threshold values for an electric motor can be:

- engine rpm threshold value: between 800 rpm and 15000 rpm,
- engine torque threshold value: equal to or above 0 Nm ,
- rotary equipment rpm threshold value: between 800 and 80000 rpm,
- selected gear threshold value: above second gear,
- vehicle speed threshold value: above 5 kph.

Regarding engine input conditions for an electric motor, engine input conditions and engine input condition threshold values correspond to motor input conditions and motor condition threshold values where applicable.

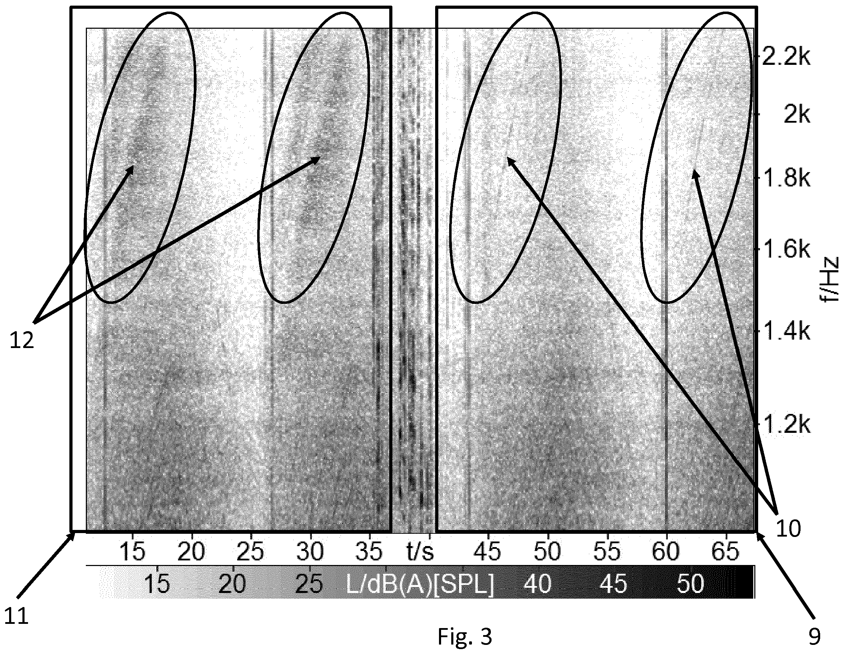

Figure 3 shows a sound spectrum measured inside a compartment of a vehicle with and without the system according to the invention active. The x-axis displays time passed in seconds. The Y-axis displays frequency in Hz. The intensity bar below the x-axis displays the sound level in dB(A). A darker colour means a higher sound level.

In frame 9, i.e. the right part of the spectrum two distinct lines 10 can be seen. The lines are encircled in order to be more visible. These lines illustrate a single tone with rising frequency over time. The rising frequency illustrates an increase in for instance engine rpm and/or rotary equipment rpm causing the tone to change frequency.

In frame 11, i.e. the left part of the spectrum no distinct lines can be seen. Instead a darker area 12 is seen covering the same frequency range as the tones in frame 9. This illustrates that the system is active and that surrounding frequencies have a similar sound level as the tone, resulting in that no single tone is perceived. The system masks the distinct tone by adding surrounding frequencies with a certain sound level.

The above description can be extended to any number of tones. One band pass filtered signal can be provided for each tone. Alternatively, one band pass filtered noise signal can cover more than one tone thereby reducing the need to provide one masking noise for each tone. Additionally, the masking noise does not need to be provided by a band pass filtered signal. The masking noise may for instance be pre-recorded noise files which are matched to engine input conditions in order to output the correct masking noise with the correct amplitude. The masking noise can be outputted by the vehicle's sound system speakers located in the compartment. Additionally, one or more speakers can be placed in the engine compartment in order to enhance the output of the masking noise. Alternative tone/noise amplitude ratios other than TNR and PR are also possible to use.

Reference signs mentioned in the claims should not be seen as limiting the extent of the matter protected by the claims, and their sole function is to make claims easier to understand.

The invention is defined by the appended claims.

## Claims

1.   Method for masking noise originating from rotary equipment in a vehicle engine, wherein the method comprises:

- checking if one or more engine input conditions fulfil engine input condition threshold values, **characterized in that** the method further comprises
- measuring a sound spectrum (8) originating from said rotary equipment and said vehicle engine inside a compartment by means of at least one microphone (7),
- calculating, in a DSP (3), a first tone/noise amplitude ratio between the amplitude of a first specific noise frequency determined by said input conditions and the amplitude of ambient sound from the measured sound spectrum (8), wherein if the first tone/noise amplitude ratio exceeds a predetermined tone/noise amplitude ratio threshold value and if said one or more engine input conditions fulfil said engine input conditions threshold values,

- outputting a first masking noise from the at least one speaker (6), wherein the first masking noise comprises a first central frequency, a first bandwidth and a first amplitude, wherein the first central frequency is the first specific noise frequency, and the first amplitude is determined by the tone/noise amplitude ratio.

2. Method according to claim 1, wherein the method comprises:

- checking in an ECU (2) if the one or more engine input conditions fulfil engine input condition threshold values, wherein, if said one or more engine input conditions fulfil said engine input conditions threshold values,
- providing from the ECU (2) to the DSP (3) comprising a noise generator (4) and at least one band pass filter said engine input conditions,
- providing from the DSP (3) to the noise generator (4) a first masking noise signal, wherein the first masking noise signal is a band pass filtered noise signal,
- outputting a first masking noise from said at least one speaker (6) having a frequency spectrum matching the provided band pass filtered noise signal by means of the noise generator (4).

3. Method according to any one of claims 1-2, wherein the method comprises:

- outputting a second masking noise from the at least one speaker (6) together with the first masking noise, wherein the second masking noise comprises a second central frequency, a second bandwidth and a second amplitude, wherein the second central frequency is correlated to said engine input conditions and the second amplitude is correlated to said engine input conditions or a calculated second tone/noise amplitude ratio, calculated in the DSP (3), between the amplitude of a second specific noise frequency and the amplitude of ambient sound from the measured sound spectrum (8), wherein the second central frequency is the second specific noise frequency.

4. Method according to any one of claims 2-3, wherein the method comprises:

- calculating, in the DSP (3), a first tone/noise amplitude ratio between the amplitude of a first specific noise frequency determined by said input conditions and the amplitude of ambient sound from the measured sound spectrum (8), where the tone/noise amplitude ratio is tone-to-noise ratio (TNR) or prominence ratio (PR),

wherein the tone/noise amplitude ratio threshold value is dependent on engine input conditions and the tone/noise amplitude ratio threshold value is between 0 and 10 dB, preferably between 0 and 6 dB.

5. Method according to any one of the preceding claims, wherein the engine input conditions are one or more of:

- engine rpm
- engine torque
- rotary equipment rpm
- selected gear
- vehicle speed
- throttle position

and wherein:

- the engine rpm threshold value is between 800 rpm and 15000 rpm,
- the engine torque threshold value is equal to or above 70 Nm
- the rotary equipment rpm threshold value is between 800 and 80000 rpm
- selected gear threshold value is above second gear
- vehicle speed threshold value is above 5 kph.

6. System (1) for masking noise originating from rotary equipment in a vehicle engine, the system (1) comprising a DSP (3), means for checking if engine input conditions fulfil engine input condition threshold values, at least one speaker (6) and means for generating noise to be output by the at least one speaker (6), **characterized in that** the system (1) further comprises at least one microphone (7) being arranged to measure a sound spectrum (8) inside a compartment, wherein the system (1) is arranged to calculate, in the DSP (3), a first tone/noise amplitude ratio between the amplitude of a first specific noise frequency determined by said input conditions and the amplitude of ambient sound from the measured sound spectrum (8) and, if the tone/noise amplitude ratio exceeds a predetermined tone/noise amplitude ratio threshold level, and if one or more engine input conditions fulfil said engine input conditions threshold values, the system is arranged to output a first masking noise from the at least one speaker (6), wherein the first masking noise has a first central frequency, a first bandwidth and a first amplitude, wherein the first central frequency is the first specific noise frequency, and the first amplitude is determined by the tone/noise amplitude ratio.

7. System (1) according to claim 6, wherein the means for checking if engine input conditions fulfil engine input condition threshold values is an ECU (2), and the system is arranged to provide engine input conditions from the ECU (2) to the DSP (3) comprising a noise generator (4) and at least one band pass filter, to provide a first masking noise signal from the DSP (3) to the noise generator (4), wherein the first masking noise signal is a band pass filtered noise signal and to output a first masking noise from the speaker (6) having a frequency spectrum matching the provided band pass filtered noise signal by means of the noise generator (4).

8. System (1) according to any one of claims 6-7, wherein the system (1) is arranged to output a second masking noise from the at least one speaker (6) together with the first masking noise, wherein the second masking noise has a second central frequency, a second bandwidth and a second amplitude, wherein the second central frequency is correlated to said engine input conditions and the second amplitude is correlated to said engine input conditions or a calculated second tone/noise amplitude ratio, calculated in the DSP (3), between the amplitude of a second specific noise frequency and the amplitude of ambient sound from the measured sound spectrum (8), wherein the second central frequency is the second specific noise frequency.

9. System (1) according to any one of claims 6-7, wherein the first masking noise has a bandwidth between 3% and 30% of the first central frequency distributed evenly around the central frequency.

10. System (1) according to claim 8, wherein the second masking noise has a bandwidth between 3% and 30% of the first central frequency distributed evenly around the central frequency.

11. System (1) according to any one of claims 6-10, wherein a first tone/noise amplitude ratio between the amplitude of a first specific noise frequency determined by said input conditions and the amplitude of ambient sound is calculated in the DSP (3) from the measured sound spectrum (8), where the tone/noise amplitude ratio is tone-to-noise ratio (TNR) or prominence ratio (PR),
wherein the tone/noise amplitude ratio threshold value is dependent on engine input conditions and the tone/noise amplitude ratio threshold value is between 0 and 10 dB, preferably between 0 and 6 dB.

12. System (1) according to any one of claims 6-11, wherein the input conditions are one or more of:

   - engine rpm
   - engine torque
   - rotary equipment rpm
   - selected gear
   - vehicle speed,
   wherein
   - the engine rpm threshold value is between 800 rpm and 15000 rpm,
   - the engine torque threshold value is equal to or above 70 Nm
   - the rotary equipment rpm threshold value is between 800 and 80000 rpm
   - selected gear threshold value is above second gear
   - vehicle speed threshold value is above 5 kph.

**Patentansprüche**

1. Verfahren zur Maskierung von Rauschen, das von rotierenden Einrichtungen in einem Fahrzeugmotor herrührt, wobei das Verfahren umfasst:

   - Prüfen, ob eine oder mehrere Motor-Eingabebedingungen Motor-Eingabebedingungsschwellenwerte erfüllen,

   **dadurch gekennzeichnet, dass** das Verfahren ferner umfasst:

   - Messen eines Schallspektrums (8), das von den rotierenden Einrichtungen und dem Fahrzeugmotor innerhalb eines Kompartiments herrührt, mittels mindestens eines Mikrofons (7);
- Berechnen in einem DSP (3) eines ersten Ton-Rausch-Amplitudenverhältnisses zwischen der Amplitude einer ersten spezifischen Rauschfrequenz, die durch die Eingabebedingungen bestimmt wird, und der Amplitude von Umgebungsschall aus dem gemessenen Schallspektrum (8),
wobei, wenn das Ton-Rausch-Amplitudenverhältnis einen vorbestimmten Ton-Rausch-Amplitudenverhältnisschwellenwert überschreitet und wenn die eine oder die mehreren Motor-Eingabebedingungen die Motor-Eingabebedingungsschwellenwerte erfüllen,
- ein erstes Maskierungsrauschen aus dem mindestens einen Lautsprecher (6) ausgegeben wird, wobei das erste Maskierungsrauschen eine erste Mittenfrequenz, eine erste Bandbreite und eine erste Amplitude umfasst, wobei die erste Mittenfrequenz die erste spezifische Rauschfrequenz ist, und die erste Amplitude durch das Ton-Rausch-Amplitudenverhältnis bestimmt wird.

2. Verfahren nach Anspruch 1, wobei das Verfahren umfasst:

- Prüfen in einer ECU (2), ob die eine oder die mehreren Motor-Eingabebedingungen Motor-Eingabebedingungsschwellenwerte erfüllen,
wobei, wenn die eine oder die mehreren Motor-Eingabebedingungen die Motor-Eingabebedingungsschwellenwerte erfüllen,
- die Motor-Eingabebedingungen von der ECU (2) für den DSP (3) bereitgestellt werden, der einen Rauschgenerator (4) und mindestens ein Bandpassfilter umfasst,
- ein erstes Maskierungsrauschsignal vom DSP (3) für den Rauschgenerator (4) bereitgestellt wird, wobei das erste Maskierungsrauschsignal ein bandpassgefiltertes Rauschsignal ist,
- ein erstes Maskierungsrauschen aus dem mindestens einen Lautsprecher (6) mit einem Frequenzspektrum, das dem bereitgestellten bandpassgefilterten Rauschsignal entspricht, mittels des Rauschgenerators (4) ausgegeben wird.

3. Verfahren nach einem der Ansprüche 1 bis 2, wobei das Verfahren umfasst:

- Ausgeben eines zweiten Maskierungsrauschens aus dem mindestens einen Lautsprecher (6) zusammen mit dem ersten Maskierungsrauschen, wobei das zweite Maskierungsrauschen eine zweite Mittenfrequenz, eine zweite Bandbreite und eine zweite Amplitude umfasst, wobei die zweite Mittenfrequenz mit den Motor-Eingabebedingungen korreliert wird, und die zweite Amplitude mit den Motor-Eingabebedingungen oder einem berechneten zweiten Ton-Rausch-Amplitudenverhältnis, das im DSP (3) berechnet wird, zwischen der Amplitude einer zweiten spezifischen Rauschfrequenz und der Amplitude von Umgebungsschall aus dem gemessenen Schallspektrum (8) korreliert wird, wobei die zweite Mittenfrequenz die zweite spezifische Rauschfrequenz ist.

4. Verfahren nach einem der Ansprüche 2 bis 3, wobei das Verfahren umfasst:

- Berechnen im DSP (3) eines ersten Ton-Rausch-Amplitudenverhältnisses zwischen der Amplitude einer ersten spezifischen Rauschfrequenz, die durch die Eingabebedingungen bestimmt wird, und der Amplitude von Umgebungsschall aus dem gemessenen Schallspektrum (8), wobei das Ton-Rausch-Amplitudenverhältnis ein Ton-Rausch-Verhältnis (TNR) oder ein Prominenzverhältnis (PR) ist,

wobei der Ton-Rausch-Amplitudenverhältnisschwellenwert von Motor-Eingabebedingungen abhängt, und der Ton-Rausch-Amplitudenverhältnisschwellenwert zwischen 0 und 10 dB und vorzugsweise zwischen 0 und 6 dB liegt.

5. Verfahren nach einem der vorhergehenden Ansprüche, wobei es sich bei den Eingabebedingungen um eine oder mehrere von folgenden handelt:

- Motor-U/min
- Motordrehmoment
- U/min der rotierenden Einrichtungen
- ausgewählter Gang
- Fahrzeuggeschwindigkeit
- Drosselklappenstellung

und wobei:

- der Motor-U/min-Schwellenwert zwischen 800 U/min und 15000 U/min liegt,
- der Motordrehmoment-Schwellenwert gleich oder über 70 Nm ist,
- der U/min-Schwellenwert der rotierenden Einrichtungen zwischen 800 und 80000 U/min liegt,
- der Schwellenwert des ausgewählten Ganges über dem zweiten Gang liegt,
- der Fahrzeuggeschwindigkeits-Schwellenwert über 5 km/h liegt.

6. System (1) zum Maskieren von Rauschen, das von rotierenden Einrichtungen in einem Fahrzeugmotor herrührt, wobei das System (1) einen DSP (3), Mittel zum Prüfen, ob Motor-Eingabebedingungen Motor-Eingabebedingungsschwellenwerte erfüllen, mindestens einen Lautsprecher (6) und Mittel zum Erzeugen von Rauschen umfasst, das durch den mindestens einen Lautsprecher (6) ausgegeben werden soll, **dadurch gekennzeichnet, dass** das System (1) ferner mindestens ein Mikrofon (7) umfasst, das zum Messen eines Schallspektrums (8) innerhalb eines Kompartiments ausgelegt ist, wobei das System (1) so ausgelegt ist, dass es im DSP (3) ein erstes Ton-Rausch-Amplitudenverhältnis zwischen der Amplitude einer ersten spezifischen Rauschfrequenz, die durch die Eingabebedingungen bestimmt wird, und der Amplitude von Umgebungsschall aus dem gemessenen Schallspektrum (8) berechnet, und das System so ausgelegt ist, dass es, wenn das Ton-Rausch-Amplitudenverhältnis einen vorbestimmten Ton-Rausch-Amplitudenverhältnisschwellenwert überschreitet und wenn die eine oder die mehreren Motor-Eingabebedingungen die Motor-Eingabebedingungsschwellenwerte erfüllen, ein erstes Maskierungsrauschen aus dem mindestens einen Lautsprecher (6) ausgegeben wird, wobei das erste Maskierungsrauschen eine erste Mittenfrequenz, eine erste Bandbreite und eine erste Amplitude aufweist, wobei die erste Mittenfrequenz die erste spezifische Rauschfrequenz ist, und die erste Amplitude durch das Ton-Rausch-Amplitudenverhältnis bestimmt wird.

7. System (1) nach Anspruch 6, wobei das Mittel zum Prüfen, ob Motor-Eingabebedingungen Motor-Eingabebedingungsschwellenwerte erfüllen, eine ECU (2) ist, und das System so ausgelegt ist, dass es Motor-Eingabebedingungen von der ECU (2) für den DSP (3) bereitstellt, der einen Rauschgenerator (4) und mindestens ein Bandpassfilter umfasst, ein erstes Maskierungsrauschen vom DSP (3) für den Rauschgenerator (4) bereitstellt, wobei das erste Maskierungsrauschsignal ein bandpassgefiltertes Rauschsignal ist, und ein erstes Maskierungsrauschens aus dem mindestens einen Lautsprecher (6) mit einem Frequenzspektrum, das dem bereitgestellten bandpassgefilterten Rauschsignal entspricht, mittels des Rauschgenerators (4) ausgibt.

8. System (1) nach einem der Ansprüche 6 bis 7, wobei das System (1) zum Ausgeben eines zweiten Maskierungsrauschens aus dem mindestens einen Lautsprecher (6) zusammen mit dem ersten Maskierungsrauschen ausgelegt ist, wobei das zweite Maskierungsrauschen eine zweite Mittenfrequenz, eine zweite Bandbreite und eine zweite Amplitude aufweist, wobei die zweite Mittenfrequenz mit den Motor-Eingabebedingungen korreliert wird, und die zweite Amplitude mit den Motor-Eingabebedingungen oder einem berechneten zweiten Ton-Rausch-Amplitudenverhältnis, das im DSP (3) berechnet wird, zwischen der Amplitude einer zweiten spezifischen Rauschfrequenz und der Amplitude von Umgebungsschall aus dem gemessenen Schallspektrum (8) korreliert wird, wobei die zweite Mittenfrequenz die zweite spezifische Rauschfrequenz ist.

9. System (1) nach einem der Ansprüche 6 bis 7, wobei das erste Maskierungsrauschen eine Bandbreite von 3 % bis 30 % der ersten Mittenfrequenz gleichmäßig um die Mittenfrequenz verteilt aufweist.

10. System (1) nach Ansprüche bis 8, wobei das zweite Maskierungsrauschen eine Bandbreite von 3 % bis 30 % der ersten Mittenfrequenz gleichmäßig um die Mittenfrequenz verteilt aufweist.

11. System (1) nach einem der Ansprüche 6 bis 10, wobei ein erstes Ton-Rausch-Amplitudenverhältnis zwischen der Amplitude einer ersten spezifischen Rauschfrequenz, die durch die Eingabebedingungen bestimmt wird, und der Amplitude von Umgebungsschall im DSP (3) aus dem gemessenen Schallspektrum (8) berechnet wird, wobei das Ton-Rausch-Amplitudenverhältnis ein Ton-Rausch-Verhältnis (TNR) oder ein Prominenzverhältnis (PR) ist, wobei der Ton-Rausch-Amplitudenverhältnisschwellenwert von Motor-Eingabebedingungen abhängt, und der Ton-Rausch-Amplitudenverhältnisschwellenwert zwischen 0 und 10 dB und vorzugsweise zwischen 0 und 6 dB liegt.

12. System (1) einem der Ansprüche 6 bis 11, wobei es sich bei den Eingabebedingungen um eine oder mehrere von folgenden handelt:

- Motor-U/min
- Motordrehmoment
- U/min der rotierenden Einrichtungen

- ausgewählter Gang
- Fahrzeuggeschwindigkeit

wobei

- der Motor-U/min-Schwellenwert zwischen 800 U/min und 15000 U/min liegt,
- der Motordrehmoment-Schwellenwert gleich oder über 70 Nm ist,
- der U/min-Schwellenwert der rotierenden Einrichtungen zwischen 800 und 80000 U/min liegt,
- der Schwellenwert des ausgewählten Ganges über dem zweiten Gang liegt,
- der Fahrzeuggeschwindigkeits-Schwellenwert über 5 km/h liegt.

**Revendications**

1. Procédé de masquage de bruit généré par un équipement rotatif dans un moteur de véhicule, le procédé consistant à :

   vérifier si une ou plusieurs conditions d'entrée de moteur satisfont à des valeurs-seuil de condition d'entrée de moteur,
   le procédé étant **caractérisé en ce qu'**il consiste en outre à :

   mesurer un spectre sonore (8) généré par ledit équipement rotatif et ledit moteur de véhicule à l'intérieur d'un compartiment au moyen d'au moins un microphone (7) ;
   calculer, dans un DSP (3), un premier rapport d'amplitude tonalité/bruit entre l'amplitude d'une première fréquence de bruit spécifique déterminée par lesdites conditions d'entrée et l'amplitude d'un son ambiant à partir du spectre sonore mesuré (8) ; et
   si le premier rapport d'amplitude tonalité/bruit dépasse une valeur-seuil de rapport d'amplitude tonalité/bruit prédéterminée et si ladite ou lesdites conditions d'entrée de moteur satisfont auxdites valeurs-seuil de condition d'entrée de moteur, émettre un premier bruit de masquage par l'au moins un haut-parleur (6), le premier bruit de masquage comprenant une première fréquence centrale, une première bande passante et une première amplitude, la première fréquence centrale étant la première fréquence de bruit spécifique, et la première amplitude étant déterminée par le rapport d'amplitude tonalité/bruit.

2. Procédé selon la revendication 1, le procédé consistant en outre à :

   vérifier, dans une ECU (2), si une ou plusieurs conditions d'entrée de moteur satisfont à des valeurs-seuil de condition d'entrée de moteur ; et
   si ladite ou lesdites conditions d'entrée de moteur satisfont auxdites valeurs-seuil de condition d'entrée de moteur :

   fournir, de l'ECU (2) au DSP (3) comprenant un générateur de bruit (4) et au moins un filtre passe-bande, lesdites conditions d'entrée de moteur ;
   fournir, du DSP (3) au générateur de bruit (4), un premier signal de bruit de masquage,
   le premier signal de bruit de masquage étant un signal de bruit filtré passe-bande ;
   émettre, par ledit au moins un haut-parleur (6), un premier bruit de masquage ayant un spectre de fréquences concordant avec le signal de bruit filtré passe-bande au moyen du générateur de bruit (4).

3. Procédé selon l'une quelconque des revendications 1 et 2, le procédé consistant à :

   émettre un second bruit de masquage par l'au moins un haut-parleur (6) conjointement avec le premier bruit de masquage, le second bruit de masquage comprenant une seconde fréquence centrale, une seconde bande passante et une seconde amplitude,
   la seconde fréquence centrale étant corrélée auxdites conditions d'entrée de moteur et la seconde amplitude étant corrélée auxdites conditions d'entrée de moteur ou à un second rapport d'amplitude tonalité/bruit calculé, calculé dans le DSP (3), entre l'amplitude d'une seconde fréquence de bruit spécifique et l'amplitude d'un son ambiant provenant du spectre sonore mesuré (8), la seconde fréquence centrale étant la seconde fréquence de bruit spécifique.

4. Procédé selon l'une quelconque des revendications 2 et 3, le procédé consistant à :

   calculer, dans le DSP (3), un premier rapport d'amplitude tonalité/bruit entre l'amplitude d'une première fréquence de bruit spécifique déterminée par lesdites conditions d'entrée et l'amplitude d'un son ambiant provenant du spectre sonore mesuré (8), le rapport d'amplitude tonalité/bruit étant un rapport tonalité-bruit (TNR) ou un rapport de proéminence (PR),

la valeur-seuil de rapport d'amplitude tonalité/bruit étant dépendante de conditions d'entrée de moteur, et la valeur-seuil de rapport d'amplitude tonalité/bruit étant comprise entre 0 et 10 dB, de préférence entre 0 et 6 dB.

5. Procédé selon l'une quelconque des revendications précédentes, dans lequel les conditions d'entrée de moteur sont une ou plusieurs des conditions suivantes :

vitesse de rotation de moteur,
couple de moteur,
vitesse de rotation d'équipement rotatif,
rapport de vitesse sélectionné,
vitesse de véhicule,
position de papillon, et
dans lequel :

la valeur-seuil de vitesse de rotation de moteur est comprise entre 800 tr/min et 15 000 tr/min,
la valeur-seuil de couple de moteur est supérieure ou égale à 70 Nm,
la valeur-seuil de vitesse de rotation d'équipement rotatif est comprise entre 800 tr/min et 80 000 tr/min,
la valeur-seuil de rapport de vitesse sélectionné est supérieure au second rapport de vitesse,
la valeur-seuil de vitesse de véhicule est supérieure à 5 km/h.

6. Système (1) de masquage de bruit généré par un équipement rotatif dans un moteur de véhicule, le système (1) comprenant un DSP (3), un moyen permettant de vérifier si des conditions d'entrée de moteur satisfont à des valeurs-seuil de condition d'entrée de moteur, au moins un haut-parleur (6) et un moyen permettant de générer un bruit qui doit être émis par l'au moins un haut-parleur (6),
le système étant **caractérisé en ce que** :

le système (1) comprend en outre au moins un microphone (7) conçu pour mesurer un spectre sonore (8) à l'intérieur d'un compartiment,
le système étant conçu pour calculer, dans le DSP (3), un premier rapport d'amplitude tonalité/bruit entre l'amplitude d'une première fréquence de bruit spécifique déterminée par lesdites conditions d'entrée et l'amplitude d'un son ambiant provenant du spectre sonore mesuré (8), et
si le rapport d'amplitude tonalité/bruit dépasse un niveau-seuil de rapport d'amplitude tonalité/bruit prédéterminé et si la ou les conditions d'entrée de moteur satisfont auxdites valeurs-seuil de condition d'entrée de moteur, le système étant conçu pour émettre un premier bruit de masquage par l'au moins un haut-parleur (6),
le premier bruit de masquage ayant une première fréquence centrale, une première bande passante et une première amplitude, la première fréquence centrale étant la première fréquence de bruit spécifique, et la première amplitude étant déterminée par le rapport d'amplitude tonalité/bruit.

7. Système (1) selon la revendication 6, dans lequel le moyen permettant de vérifier si des conditions d'entrée de moteur satisfont à des valeurs-seuil de condition d'entrée de moteur est une ECU (2), et le système est conçu pour fournir des conditions d'entrée de moteur de l'ECU (2) au DSP (3) comprenant un générateur de bruit (4) et au moins un filtre passe-bande, pour fournir un premier signal de bruit de masquage du DSP (3) au générateur de bruit (4), le premier signal de bruit de masquage étant un signal de bruit filtré passe-bande, et pour émettre, par le haut-parleur (6), un premier bruit de masquage ayant un spectre de fréquences concordant avec le signal de bruit filtré passe-bande au moyen du générateur de bruit (4).

8. Système (1) selon l'une quelconque des revendications 6 et 7, le système (1) étant conçu pour émettre un second bruit de masquage par l'au moins un haut-parleur (6) conjointement avec le premier bruit de masquage,
le second bruit de masquage ayant une seconde fréquence centrale, une seconde bande passante et une seconde amplitude, la seconde fréquence centrale étant corrélée auxdites conditions d'entrée de moteur et la seconde amplitude étant corrélée auxdites conditions d'entrée de moteur ou à un second rapport d'amplitude tonalité/bruit calculé, calculé dans le DSP (3), entre l'amplitude d'une seconde fréquence de bruit spécifique et l'amplitude d'un son ambiant provenant du spectre sonore mesuré (8), la seconde fréquence centrale étant la seconde fréquence de bruit spécifique.

**9.** Système (1) selon l'une quelconque des revendications 6 et 7, dans lequel le premier bruit de masquage a une bande passante comprise entre 3 % et 30 % de la première fréquence centrale, distribuée régulièrement autour de la fréquence centrale.

**10.** Système (1) selon la revendication 8, dans lequel le second bruit de masquage a une bande passante comprise entre 3 % et 30 % de la première fréquence centrale, distribuée régulièrement autour de la fréquence centrale.

**11.** Système (1) selon l'une quelconque des revendications 6 à 10, dans lequel un premier rapport d'amplitude tonalité/bruit entre l'amplitude d'une première fréquence de bruit spécifique déterminée par lesdites conditions d'entrée et l'amplitude d'un son ambiant est calculé dans le DSP (3) à partir du spectre sonore mesuré (8), le rapport d'amplitude tonalité/bruit étant un rapport tonalité-bruit (TNR) ou un rapport de proéminence (PR), la valeur-seuil de rapport d'amplitude tonalité/bruit étant dépendante de conditions d'entrée de moteur, et la valeur-seuil de rapport d'amplitude tonalité/bruit étant comprise entre 0 et 10 dB, de préférence entre 0 et 6 dB.

**12.** Système (1) selon l'une quelconque des revendications 6 à 11, dans lequel les conditions d'entrée sont une ou plusieurs des conditions suivantes :

vitesse de rotation de moteur,
couple de moteur,
vitesse de rotation d'équipement rotatif,
rapport de vitesse sélectionné,
vitesse de véhicule, et
dans lequel :

la valeur-seuil de vitesse de rotation de moteur est comprise entre 800 tr/min et 15 000 tr/min,
la valeur-seuil de couple de moteur est supérieure ou égale à 70 Nm,
la valeur-seuil de vitesse de rotation d'équipement rotatif est comprise entre 800 tr/min et 80 000 tr/min,
la valeur-seuil de rapport de vitesse sélectionné est supérieure au second rapport de vitesse,
la valeur-seuil de vitesse de véhicule est supérieure à 5 km/h.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120076314 A